# EUROPEAN PATENT SPECIFICATION

(11) **EP 2 272 598 B1**
(45) Date of publication and mention of the grant of the patent: **12.09.2012**
(21) Application number: 09425272.3
(22) Date of filing: 09.07.2009
(51) Int. Cl.: B09B 3/00, E01C 3/00

(54) **Process for the production of aggregates for making road foundations and the like**
Verfahren zur Herstellung von Betonzuschlägen zur Herstellung von Straßenfundamenten und dergleichen
Procédé pour la production d'agrégats pour la réalisation de fondations de routes et similaires

(43) Date of publication of application: 12.01.2011
(73) Proprietor: Consorzio Cerea S.p.A., 37053 Cerea (VR) (IT)
(72) Inventor: Tavellin, Giuseppe, 37053 Cerea (Verona) (IT); Faccio, Andrea, 37134 Verona (IT)
(74) Representative: Biggi, Cristina

(56) References cited:
- WO-A-02/08141
- WO-A-92/15536
- WO-A-96/04426
- DE-A1- 3 603 862
- DE-B4- 19 758 658

## Description

The present invention relates to a process for the production of aggregates for making road foundations and the like.

At present, aggregates for making road foundations and the like consist of mixtures of inert materials which may have various particle size measurements and different physical properties (for example "resistance to penetration, compaction capacity, etc.") according to requirements.

In particular, in the production of aggregates for road foundations, in addition to other components, use is made of waste materials from other activities, such as demolitions, etc. Moreover, according to the prior art, it is known that to produce aggregates slaked lime or hydraulic lime is added to the mixture of the various components. Therefore, according to the prior art, although allowing the recovery of some waste materials from other work, the process for producing aggregates is relatively expensive since it requires the addition of other raw materials both as aggregates and as a bonding agent (slaked lime or hydraulic lime).

In this situation the technical purpose which forms the basis of the present invention is to provide a process for the production of aggregates for making road foundations and the like which overcomes the above-mentioned disadvantages.

Methods for producing aggregates for roadworks using waste, in particular slag, are disclosed in the documents DE 197 58 658 A and in DE 36 03 862 A1.

In particular, the technical purpose of the present invention is to provide a process for the production of aggregates for making road foundations and the like which has a lower production cost than traditional methods.

The technical purpose specified and the aims indicated are achieved by a process for the production of aggregates for making road foundations and the like as defined in claim 1.

Particular embodiments of the invention are set out in the dependent claims.

Further features and the advantages of the present invention are more apparent in the detailed description of several preferred, non-limiting embodiments of a process for the production of aggregates for making road foundations and the like, with reference to the accompanying drawings in which:
- Figure 1 is a general block diagram of the process in accordance with the present invention;
- Figure 2 is a detailed block diagram of the first part of the process illustrated in the diagram of Figure 1;
- Figure 3 is a detailed block diagram of the last part of a process for the production of a concrete which uses the aggregates produced with the process illustrated in the diagram of Figure 1;
- Figure 4 is a detailed block diagram of a central part of the process illustrated in the diagram of Figure 1;
- Figure 5 is a detailed block diagram of an alternative embodiment of the part of the process illustrated in the diagram of Figure 4;
- Figure 6 is a block diagram of a possible alternative embodiment which can be applied both to the part of the process illustrated in Figure 4 and to that illustrated in Figure 5; and
- Figure 7 is a schematic view at atomic-ionic level of a process for the formation of stable silicates which takes place in the process in accordance with the present invention.

The following conventions were used in the accompanying drawings:
- oval blocks represent the various steps of the process;
- rectangular blocks represent all of the materials involved: raw materials, products resulting from the process and waste;
- the arrows indicate the sequence of the various steps;
- both the blocks and the arrows drawn with dashed lines indicate optional aspects of the various embodiments illustrated of the process according to the invention; and
- the blocks drawn with a dot-dash line group together various blocks indicating the same step carried out on different materials.

In general, the process for the production of aggregates for making road foundations and the like according to the present invention may be implemented in many different ways.

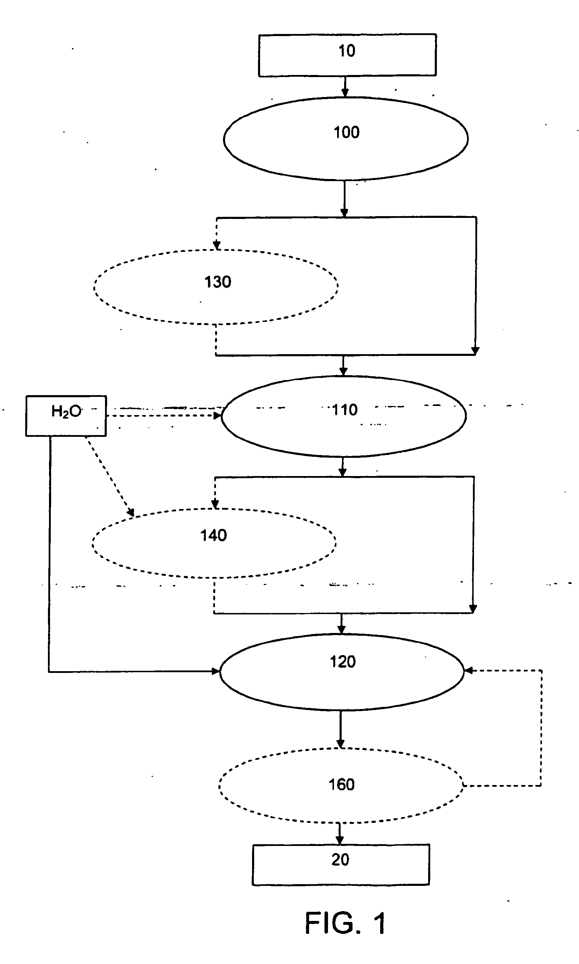

However, Figure 1 shows a general diagram valid for all of the various methods of implementation, which will therefore be described first.

First, all of the methods of implementation involve an operating step of selecting 100 a plurality of types of waste materials 10 containing, amongst other components, quicklime (CaO), silicates and heavy metals (in particular in the form of ions). It should be noticed that to keep the description simple hereinafter all heavy metals will be indicated with the "chemical symbol" Me and the relative ions as Meⁿ⁺, where the symbol n indicates an integer corresponding to the oxidation number (valence) of the ion (e.g.: Zn²⁺, Cr³⁺).

Once the waste materials 10 have been selected (advantageously all solids), the process involves a step of mixing 110 the materials in predetermined proportions to obtain a mixture of waste materials 10 (obviously advantageously understood to be a mixture in the solid state). In the more simple embodiments mixing may be carried out using a mechanical shovel (such as a digger). However, in other embodiments mixing may be carried out in suitable apparatuses.

Moreover, advantageously, the process according to the present invention may be implemented without adding any other material than the waste materials 10, which is what happens in the preferred embodiment.

Once the mixture has been created, the process involves a step of wetting the mixture with water. Said step may be carried out before the subsequent storage step 120, or simultaneously with it.

The storage step 120 involves storing the mixture for a predetermined period of time and during the whole period repeatedly wetting the mixture with water. Preferably, during the storage step 120 all of the material is always kept at a predetermined moisture level. Moreover, advantageously, during the storage step 120 there may be additional steps of mixing the mixture to guarantee more even wetting of all of the material and, consequently, more even treatment of all of the waste materials. The aim of the storage step 120 is to allow the mixture to mature (meaning that the step could alternatively be called a maturing step 120), that is to say, to cause the conversion of the waste materials 10 able to release soluble ions into materials which are chemically more stable.

This occurs thanks to the fact that, during the storage/maturing step 120, the mixture is kept wet with water to promote the occurrence of chemical reactions which convert the various waste materials 10 into products which are chemically inert and non-polluting.

Therefore, at the end of the storage step 120 the mixture constitutes the aggregate 20 for making road foundations and the like.

The following is a detailed description of the main chemical reactions which occur during the maturing step 120.

The starting point for said reactions is the quicklime contained in the waste materials 10 which may combine both with water and with carbon dioxide in the atmosphere (usually both reactions occur during the storage step 120). Depending on which is the starting reaction, the subsequent steps change. When the quicklime combines with water, the chemical reaction which occurs is the formation of calcium hydrate or slaked lime according to the chemical process:

CaO + H₂O → Ca(OH)₂

The slaked lime in turn makes hydroxide ions (OH⁻) available in the mixture according to the chemical process of dissociation:

Ca(OH)₂ → Ca(OH)⁺ + OH⁻

which describes the slaked lime dissociation reaction, as well as, subsequently according to the process:

Ca(OH)⁺ → Ca⁺⁺ + OH⁻

Therefore, to sum up, the combination of the slaked lime with water may be described by the chemical expression:

Ca(OH)₂ → Ca⁺⁺ + 2 OH⁻

According to this first embodiment of the present invention, the process therefore involves the insolubilisation of the heavy metals with an alkaline pH present in the mixture, which combine with the hydroxide ions to give hydroxides according to the general formula:

Meⁿ⁺ + n OH⁻ → Me(OH)ₙ

in which, as indicated above, n is an integer equal to the oxidation number (valence) of the metal ion. Two possible examples of conversion are:

Zn⁺⁺ + 2 OH⁻ → Zn(OH)₂

Cr³⁺ + 3 OH⁻ → Cr(OH)₃

It should be noticed that whilst the starting ions are soluble in water and therefore polluting, the resulting hydroxides are insoluble and therefore not subject to significant dissociation.

As already indicated, the quicklime (calcium oxide) may combine with the carbon dioxide contained in the air through a process of carbonation. In this case, the process according to the present invention involves the following chemical reaction:

CaO + CO₂ → CaCO₃

A similar result may be obtained with a mixed process in which the quicklime combines with the water to give slaked lime according to the formula shown above and in which the slaked lime, instead of combining with water, combines with the carbon dioxide in the atmosphere according to the reaction:

Ca (OH) ₂ + CO₂ → CaCO₃ + H₂O

again giving calcium carbonate.

In this case the reaction summarising the two steps is:

CaO + CO₂ → CaCO₃

At this point, the process according to the present invention involves, similarly to the previous case, insolubilisation of the heavy metals (those able to form insoluble carbonates). However, unlike the previous case, in this case the heavy metals are not converted into hydroxides, but instead, in the water solution, into carbonates according to a formula of the type (the formula for copper is provided by way of example):

CaCO₃ + Cu⁺⁺ → Ca⁺⁺ + CuCO₃

In this case, due to the exchange of the carbonate ion (CO₃⁼), carbonates which are much less soluble than the starting calcium carbonate (CaCO₃) may be formed.

Finally, it should be noticed that the Ca++ ion which is in turn released is never a pollutant. Again according to the process for producing aggregates 20 according to the present invention, as well as the chemical reactions indicated above, during the maturing step 120 there is also a process of crystallisation of the heavy metals with the formation of stable silicates.

In practice, it is an induced reproposal of an alteration mechanism similar to that of chemical weathering of silicates. The silicates are advantageously also present in the waste materials 10 used in the present invention.

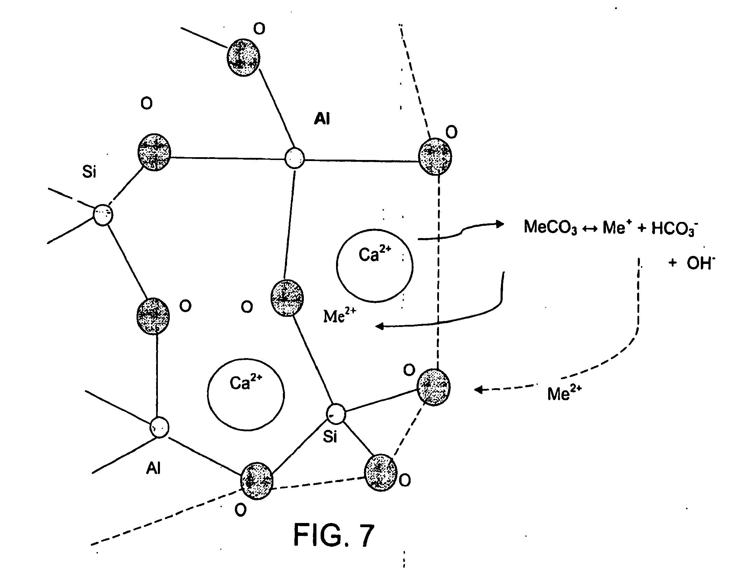

The crystallisation process follows the pattern, typical of an alteration process, in which the combined action of water, Meⁿ⁺ ions and OH⁻ ions causes the rearrangement of the crystal structure of the silicates present in the waste materials 10. The description which follows, of the methods with which the process occurs, is proposed with reference to Figure 7 which schematically illustrates the atomic structure of a superficial portion of a silicate (the dashed line indicates its surface, whilst the continuous lines indicate its chemical bonds between the various elements (oxygen O, silicon Si and aluminium Al).

On the surface of silicate minerals there are usually unsaturated electric charges. It is a case of reactive points whose number and distribution depend on the composition and structure of the material and on the more or less rapid cooling with which it was obtained.

It is at these "reactive sites" that, according to the present invention, the polar molecules of the water and the substances carried in solution (Meⁿ⁺ and OH⁻ ions) carry out their action of breaking up and reforming the crystal structure of the mineral. The basic explanation for the phenomenon, which is thermodynamic, is the fact that when in a crystal there are bonds which are weak and greatly polarised, they tend to be substituted by more stable and less polarised bonds.

This applies for calcium which is an "alkaline earth" metal that does not have free orbitals and therefore cannot form multiple non-ionic bonds. Therefore, calcium, which is present in large quantities in some types of waste materials 10 containing crystal lattice silicates, mainly forms electrostatic secondary bonds with them.

For example, in the case of black slag from steel-works (which, as described in more detail below, is one of the waste materials 10 preferably used in the method according to the invention), the rapid cooling which is the basis for the formation of the black slag causes it to solidify, with only partial formation of crystal lattices in which the calcium can bond electrostatically.

Therefore, during the storage time, according to the present invention, the combined action of the water and the hydroxide ion which is released during the quicklime hydration step, chemically attacks (definitively breaking them) the calcium - oxygen electrostatic secondary bonds.

The breaking of such bonds creates "unbalances" of electric charges which are saturated by those carried by the metal ions (Zn, Cu, etc.) which instead can form stable bonds with the oxygen and be structured in the crystal lattice, thus producing an aggregate product suitable for use for forming road foundations.

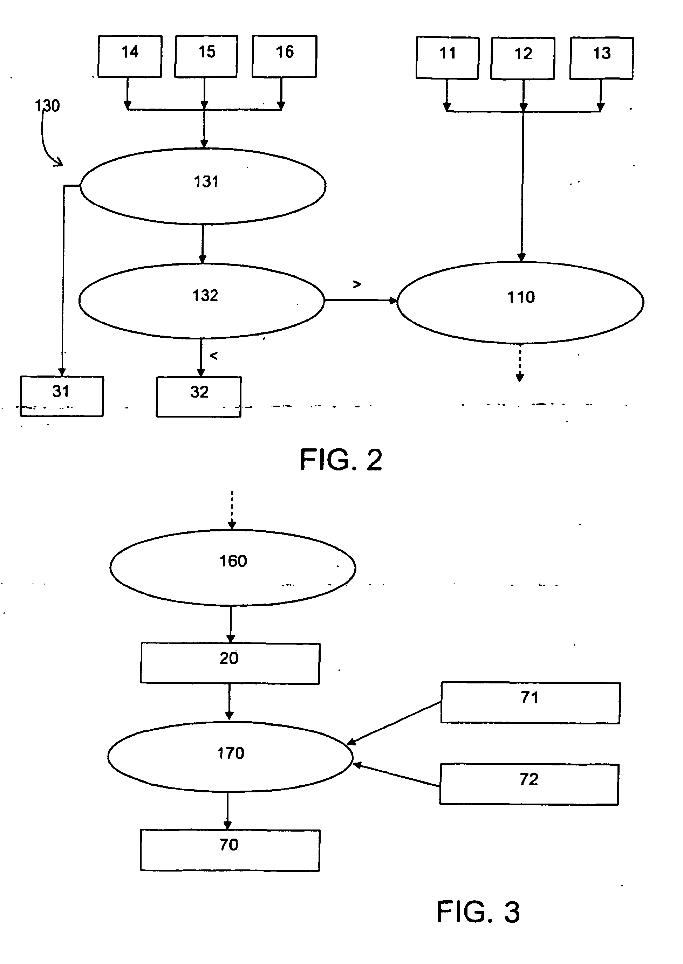

Figure 2 shows in more detail a preferred embodiment of the initial steps of the process according to the present invention, including the steps generically indicated as optional in Figure 1.

In the preferred embodiment the process according to the present invention involves the use of six types of waste materials 10 which are selected during the selection step. They are (the preferred quantities indicated as percentages shall be understood to be weights relative to the overall weight of the mixture to be obtained):
a) quarry wastes 11 such as overburden, marble off-cuts and other waste deriving from natural stones subjected to simple mechanical processing. Preferably included in the mixture only in very small quantities of < 1 ‰;
b) construction and demolition wastes 12 such as cement, bricks, mixed construction and demolition wastes, soil from excavation (all uncontaminated and therefore never from decontaminated sources). Advantageously, included in the mixture in a percentage varying between 10 and 20%;
c) inert waste 13 from other processing. Substantially consisting of "washed" gravels deriving from plants which carry out "washing of earth" or of black slag from steel-works (see also point e) below), which have already undergone a first crushing and iron removal process. Advantageously used in the mixture in a percentage varying between 10 and 20%.
d) white slag 14 from steel-works. Usually "ladle slag" which must advantageously arrive at the plant already wet and which is substantially a mixture of calcium oxide (quicklime) and calcium carbonate. For the quantities used, refer to point f);
d) black slag 15 from steel-works. Slag from an electric furnace which, in the production plant, was subjected to a rapid temperature reduction. Advantageously, included in the mixture in a percentage varying between 35 and 45%; and
f) refractory materials 16 from steel-works. The refractory materials preferably contain calcium (dolomitic) with small percentages of impurities of other refractory materials (containing calcium/siliceous, magnesic, aluminate, etc.). The refractory materials also contain quicklime (CaO). As regards the quantities preferably used, the sum of refractory materials and white slag (points d) and f)) constitutes a share of the mixture which varies between 25 and 35%.

As shown in Figure 1, and better illustrated in Figure 2, before the mixing step 110 the waste materials 10 may be subjected to a preliminary treatment step 130 which may affect all or only some of the waste materials 10. In particular, according to the preferred embodiment of the present invention, the preliminary treatment step 130 is only applied for the wastes of points d), e) and f) indicated above, and in turn comprises at least one of the following operating steps (advantageously both, one after another):
- a first iron removal step 131 for eliminating any metal debris 31 with large dimensions. Advantageously, large "dregs" are extracted by hand or using a magnet from the selection of black and white slags and are then beaten, to remove slag from them, and sent on for other recycling processes; and
- a sieving step 132 to eliminate the fine fraction 32 of such materials (for example < 10 mm) which, as a waste product of the process disclosed may then be sent on for other processing. By way of example, the sieving step 132 may be carried out with a 0 - 8 mm rotary sieve.

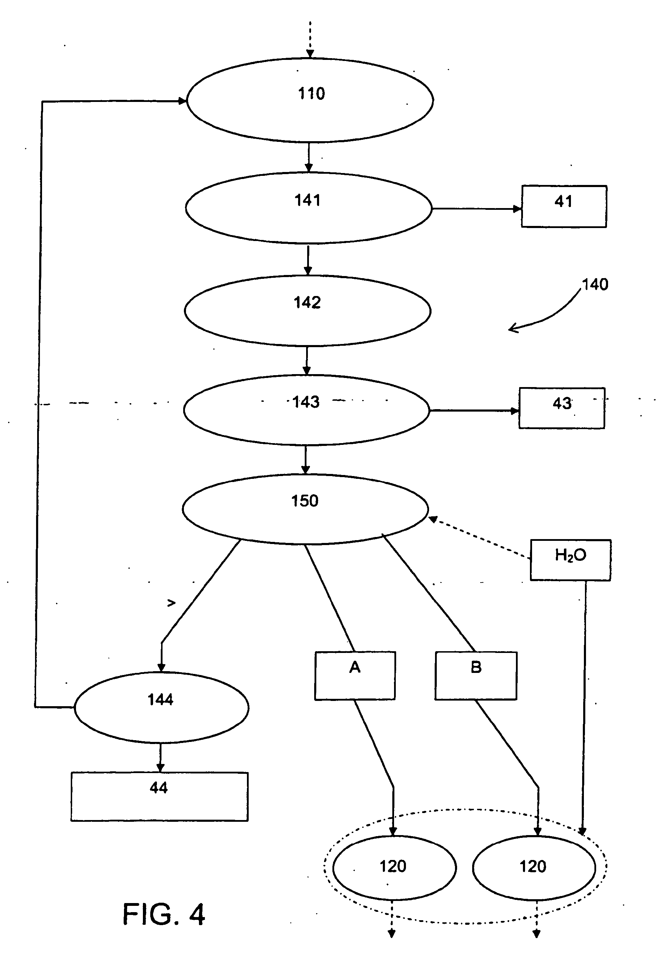

In more complex embodiments, according to the invention, before the storage step 120 with wetting, one or more intermediate treatment steps 140 are carried out. Figures 4 to 6 show several possible sequences of such intermediate steps. However, in general, the number, type and sequence of the intermediate steps may vary according to requirements. Moreover, they may be carried out before, during or after the mixing step 110 according to the operating conditions.

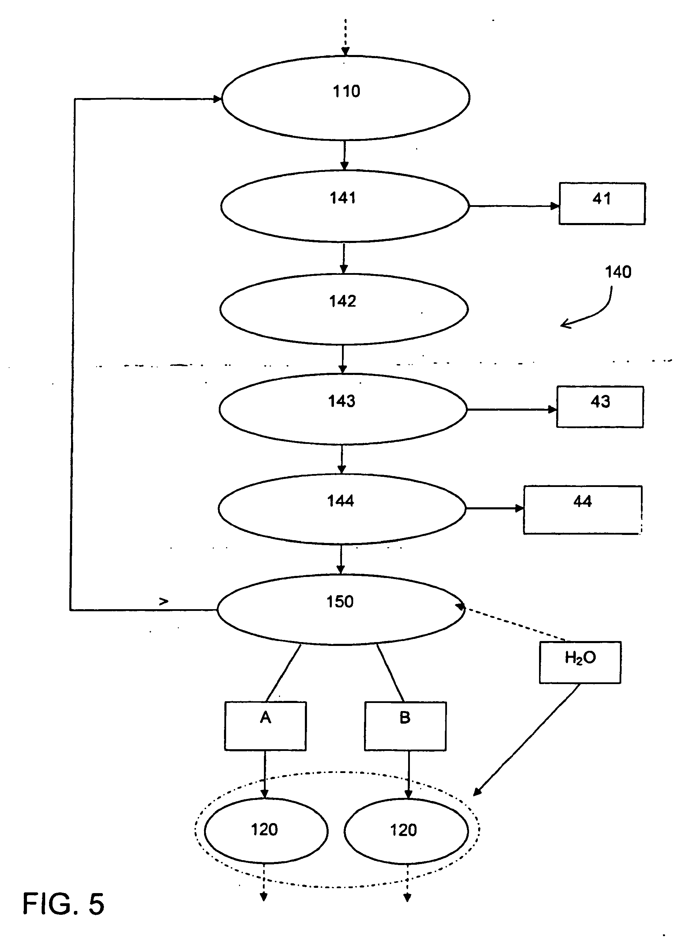

A first possible intermediate treatment step 140 is a step 141 of eliminating any bulky wastes 41. In Figures 4 and 5 it is carried out immediately after the mixing step 110 and before the subsequent intermediate treatment steps 140.

A second possible intermediate treatment step 140 consists of one or more steps of crushing 142 waste materials 10 contained in the mixture (although crushing 142 may be carried out before the mixture is formed). In the preferred embodiments the crushing step 142 is always present if the wastes 10 were not previously crushed. In Figures 4 and 5 the crushing step 142 is carried out immediately after the step 141 of eliminating bulky wastes. Further possible intermediate treatment steps 140 are a second iron removal step 143 for eliminating any ferrous wastes 43, and a step 144 of eliminating any light impurities 44, such as paper, wood, plastic and the like. The latter step 144 of eliminating light impurities 44 may for example be carried out in a vacuum chamber using the ballistic separator principle. In Figure 4 the second iron removal step 143 is carried out immediately after the crushing step 142, whilst the step 144 of eliminating light impurities 44 is carried out after a further, division step 150 described below. In contrast, in the case in Figure 5, the step 144 of eliminating light impurities 44 is carried out immediately after the second iron removal step 143. If they are carried out before the mixing step 110, the intermediate treatment steps 140 are carried out either on the individual waste materials 10 or on their partial mixtures. Moreover, in this case, there is a correspondence between the intermediate treatment step 140 and the preliminary treatment step 130.

In the preferred embodiments, the method according to the present invention always comprises an intermediate treatment step 140 consisting of one or more steps 150 of dividing the mixture into a plurality of groups A, B, C, D, E, F with predetermined particle size measurements, so that the storage step 120 with wetting can be carried out separately for the different groups A, B, C, D, E, F thus obtaining aggregates 20 which are already divided according to particle size measurement directly at the end of the storage step 120.

In the embodiments illustrated, the dividing step 150 is carried out before the storage step 120 and after the mixing step 110. However, in other embodiments, it may be carried out before the mixing step 110. But in that case at least the mixing step 110 and the storage step 120 must be carried out separately for homogeneous groups A, B, C, D, E, F of different waste materials 10.

In the embodiments in Figures 4 and 5 the dividing step 150 takes place using a sieve with two particle size measurement outfeeds which may even overlap (for example, corresponding to 0 - 8 mm and 0 - 80 mm. Said result may be achieved, in the known way, by suitably adjusting the feed speed of the material at the first sieving station with lower particle size measurement so that part of the 0 - 8 mm material can proceed towards the second sieving station with higher particle size measurement), allowing two materials A, B to be obtained, having similar composition but different particle size measurement. In contrast, the oversieve material is sent back to the mixing step 110 so that it can again be subjected to the crushing step 142 (obviously it could also be sent directly to the latter). It should be noticed that, in the diagram in Figure 4, the step 144 of eliminating any light impurities 44 is only carried out on the oversieve material, whilst in the diagram in Figure 5 it takes place before the dividing step 150.

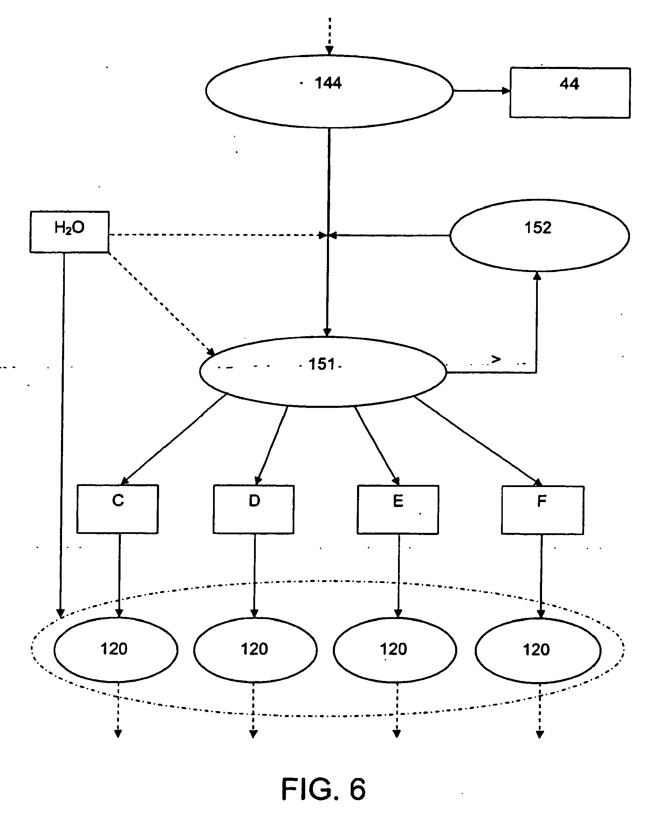

Figure 6 shows a possible alternative embodiment to both of the operating diagrams illustrated in Figures 4 and 5. In particular, with reference to the diagram in Figure 4, according to the modification illustrated in Figure 6 the oversieve material from the sieve of Figure 4, after having undergone the step 144 of eliminating any light impurities 44, is not sent back to the mixing step 110, but is subjected to a second dividing step 151. In this case the sieve has four outfeeds with different particle size measurements, even partly overlapping (for example, equal to 0 - 2 mm, 0 - 8 mm, 0 - 30 mm and 30 - 60 mm), as well as an oversieve outfeed. This second sieve therefore allows four materials C, D, E, F to be obtained, having similar composition but different particle size measurements. In contrast, the oversieve material is subjected to another crushing step 152 then is sieved again until completely graded. The combination of the embodiment of Figure 6 and that of Figure 4 therefore allows six materials A, B, C, D, E, F having different particle size measurements to be obtained.

In contrast, when combined with the embodiment of Figure 5, the embodiment of Figure 6 forms an alternative to it in which, instead of having a sieve with two outfeeds allowing only two materials A, B to be obtained, there is a sieve with four outfeeds, allowing four materials C, D, E, F with different particle size measurements to be obtained.

Moreover, advantageously, before and during the various sieving operations the waste materials 10 are abundantly wet in preparation for the subsequent maturing step 120.

According to the present invention, the wetting step is advantageously carried out in such a way as to maintain a level of moisture of 10% by weight in the mixture, preferably at least 15% by weight, for the entire duration of the storage step 120 which usually varies between 15 and 21 days.

Moreover, in the preferred embodiment, at the end of the storage step 120 the process involves a step 160 of checking the chemical composition of the mixture relative to reference parameters, to check the effective conversion of the polluting materials into inert materials. If, after the checking step 160 the reference parameters are not adhered to, the process involves an extension of the storage step 120 with further wetting for an additional or predetermined period of time (for example another week) or a period defined according to the result of the step 160 of checking the composition (based on the difference between what was achieved and what one wants to achieve). This is repeated until the reference parameters are adhered to.

At that point the aggregates 20 are definitely ready.

Finally, Figure 3 shows integration of the process according to the present invention in a process for the production of concretes 70 for making road foundations and the like.

During an amalgamating step 170, the aggregates 20 resulting from the process disclosed are mixed with natural aggregates 71 and/or hydraulic bonding agents 72 to give concretes 70.

The present invention brings important advantages. First, thanks to the possibility of using exclusively waste materials, the process for producing aggregates according to the present invention has a lower production cost than traditional methods.

Second, the process is also an excellent system for recycling waste materials and for rendering inert the pollutants present in them.

It should also be noticed that the present invention is relatively easy to produce and that even the cost linked to implementing the invention is not very high.

## Claims

1. A process for producing aggregates for making road foundations and the like, **characterised in that** it comprises the following operating steps:
a step (100) of selecting the following waste materials: quarry wastes (11) such as overburden, marble off-cuts and other waste deriving from natural stones subjected to simple mechanical processing;
uncontaminated construction and demolition wastes (12) such as cement, bricks, mixed wastes, soil from excavation;
inert wastes (13) such as washed gravels;
white slag (14) from steel-works, being a wet mixture of calcium oxide and calcium carbonate;
black slag (15) from steel-works, being a slag from an electric furnace which, in the production plant, was subjected to rapid temperature reduction;
refractory materials (16) from steel works;a step (110) of mixing said materials in predetermined proportions to obtain a mixture of the waste materials (10);
a step of wetting the mixture with water; and
a step (120) of storing the mixture for a predetermined period of time, repeatedly wetting it with water during the entire period, so that during the storage period, chemical reactions take place converting the various waste materials (10) into products which are chemically inert and non-polluting, said mixture at the end of the storage step (120) constituting an aggregate (20) for making road foundations and the like.

2. The process according to claim 1, **characterised in that** during the storage period the chemical reactions which take place include conversion of the quicklime present in the mixture into calcium carbonate and/or slaked lime and insolubilisation chemical reactions, in particular as hydroxides and carbonates, of the heavy metals present in the mixture.

3. The process according to claim 1 or 2, **characterised in that** during the storage step (120) a crystallisation process takes place with formation of stable silicates with the inclusion of metals present in the mixture.

4. The process according to any of the foregoing claims, **characterised in that** it is implemented using exclusively waste materials (10) and water, without adding anything else.

5. The process according to claim 1, **characterised in that** the step (110) of mixing the waste materials (10) takes place with the following proportions, expressed as percentages relative to the overall weight of the resulting mixture:
0% < quarry wastes (11) ≤ 1‰;
10% ≤ construction and demolition wastes (12) ≤20%;
10% ≤ inert wastes (13) ≤ 20‰;
25% ≤ white slag (14) + refractory materials (16) ≤ 35%; and
35% ≤ black slag (15) ≤ 45%.

6. The process according to any of the foregoing claims, **characterised in that** it also comprises, before the mixing step (110), a preliminary treatment step (130) for all or some of the waste materials (10).

7. The process according to claim 6, **characterised in that** the preliminary treatment step (130) is carried out on the white slag (14), on the black slag (15) and on the refractory materials (16).

8. The process according to claim 6 or 7, **characterised in that** the preliminary treatment step (130) involves at least one of the following operating steps:
iron removal (131) for eliminating any metal debris (31) having large dimensions; and
sieving (132) for eliminating the fine fraction (32) of said materials.

9. The process according to any of the foregoing claims, **characterised in that** it also comprises, before the storage step (120) with wetting, one or more of the following steps in any order:
a step (141) of eliminating any bulky wastes (41);
one or more steps (142), (152) of crushing the waste materials (10) contained in the mixture;
an iron removal step (143) of eliminating any ferrous wastes (43); and
a step (144) of eliminating any light impurities (44), such as paper, wood, plastic and the like;
each of said steps being performed before or after the mixing step (110).

10. The process according to any of the foregoing claims, **characterised in that** it also comprises, before the storage step (120) and after the mixing step (110), a step (150) of dividing the mixture into a plurality of groups (A), (B), (C), (D), (E), (F) with predetermined particle size measurements; the storage step (120) with wetting being carried out separately for the different groups (A), (B), (C), (D), (E), (F), thus obtaining aggregates (20) already divided according to particle size measurement.

11. The process according to any of the claims from 1 to 9, **characterised in that** it also comprises, before the mixing step (110), a step (150) of dividing each waste material into a plurality of groups (A), (B), (C), (D), (B), (F) with predetermined particle size measurements; also being **characterised in that** the mixing step (110) and the storage step (120) are carried out separately for homogeneous groups (A), (B), (C), (D), (E), (F) of the different waste materials (10).

12. The process according to claim 10 or 11, **characterised in that**, after the dividing step (150), any pieces of material with a particle size measurement greater than a maximum value allowed are subjected to a crushing step (142), (152) either directly or by being sent back to the mixing step (110).

13. The process according to any of the foregoing claims, **characterised in that** the wetting step is carried out to maintain a level of moisture of at least 10% by weight, and preferably at least 15% by weight in the mixture.

14. The process according to any of the foregoing claims, **characterised in that** the storage step (120) lasts for at least 15 days.

15. The process according to any of the foregoing claims, **characterised in that** it also comprises, at the planned end of the storage step (120), a step (160) of checking the chemical composition of the mixture relative to reference parameters and, if the reference parameters are not adhered to, an extension of the storage step (120) with wetting for an additional or predetermined period of lime or a period defined according to the result of the step (160) of checking the composition.

16. A process for producing concretes for making road foundations and the like, **characterised in that** it comprises:
an operating step of producing an aggregate (20) according to any of the foregoing claims; and
an amalgamation (170) operating step during which the aggregate (20) is mixed with natural aggregates and/or hydraulic bonding agents.

## Patentansprüche

1. Verfahren zur Herstellung von Betonzuschlägen zur Herstellung von Straßenfundamenten und dergleichen, **dadurch gekennzeichnet, dass** es die folgenden Arbeitsschritte umfasst:
einen Schritt (100) der Auswahl der folgenden Abfallmaterialien: Steinbruchabfälle (11) wie Abraum, Marmorverschnitt und anderer, von Natursteinen abstammender Abfall, die einer einfachen mechanischen Verarbeitung unterzogen wurden;
unkontaminierte Bau- und Abbruchabfälle (12) wie Zement, Ziegelsteine, Mischabfälle, Boden von Erdaushuben;
inerte Abfälle (13) wie Waschkies;
weiße Schlacke (14) aus Stahlwerken, die eine feuchte Mischung aus Calciumoxid und Calciumcarbonat ist;
schwarze Schlacke (15) aus Stahlwerken, die eine Schlacke aus einem Elektroofen ist, der in der Herstellungsanlage einer schnellen Temperatursenkung ausgesetzt wurde;
feuerfeste Materialien (16) aus Stahlwerken; einen Schritt (110) des Mischens der Materialen in festgelegten Proportionen zum Erhalt einer Mischung der Abfallmaterialien (10);
einen Schritt des Befeuchtens der Mischung mit Wasser; und
einen Schritt (120) des Lagerns der Mischung für einen festgelegten Zeitraum, wobei sie wiederholt während des gesamten Zeitraums mit Wasser befeuchtet wird, damit während des Lagerungszeitraums chemische Reaktionen stattfinden, bei denen die verschiedenen Abfallmaterialien (10) in Produkte umgewandelt werden, die chemisch inert und nicht verschmutzend sind, wobei die Mischung am Ende des Lagerungsschrittes (120) einen Betonzuschlag (20) zur Herstellung von Straßenfundamenten und dergleichen bildet.

2. Verfahren nach Anspruch 1, **dadurch gekennzeichnet, dass** während des Lagerungszeitraums die stattfindenden chemischen Reaktionen eine Umwandlung des in der Mischung vorhandenen Ätzkalks in Calciumcarbonat und/oder Löschkalk und chemische Insolubilisierungsreaktionen, insbesondere als Hydroxide und Carbonate, der in der Mischung vorhandenen Schwermetalle umfassen.

3. Verfahren nach Anspruch 1 oder 2, **dadurch gekennzeichnet, dass** während des Lagerungsschritts (120) ein Kristallisationsverfahren mit der Bildung von stabilen Silikaten mit dem Einschluss von in der Mischung vorhandenen Metallen stattfindet.

4. Verfahren nach einem der vorangehenden Ansprüche, **dadurch gekennzeichnet, dass** es unter der ausschließlichen Verwendung von Abfallmaterialien (10) und Wasser ohne die Hinzufügung von anderem implementiert wird.

5. Verfahren nach Anspruch 1, **dadurch gekennzeichnet, dass** der Schritt (110) des Mischens der Abfallmaterialien (10) mit den folgenden Proportionen stattfindet, die als Prozentanteile relativ zum Gesamtgewicht der resultierenden Mischung angegeben werden:
0 % < Steinbruchabfälle (11) ≤ 1 %;
10 % ≤ Bau- und Abbruchabfälle (12) ≤ 20 %;
10 % ≤ inerte Abfälle (13) ≤ 20 %;
25 % ≤ weiße Schlacke (14) + feuerfeste Materialien (16) ≤ 35 %; und
35 % ≤ schwarze Schlacke (15) ≤ 45 %.

6. Verfahren nach einem der vorangehenden Ansprüche, **dadurch gekennzeichnet, dass** es ferner vor dem Schritt des Mischens (110) einen Schritt der Vorbehandlung (130) der gesamten Abfallmaterialien (10) oder eines Teils davon umfasst.

7. Verfahren nach Anspruch 6, **dadurch gekennzeichnet, dass** der Schritt der Vorbehandlung (130) mit der weißen Schlacke (14), mit der schwarzen Schlacke (15) und mit den feuerfesten Materialien (16) ausgeführt wird.

8. Verfahren nach Anspruch 6 oder 7, **dadurch gekennzeichnet, dass** der Schritt der Vorbehandlung (130) mindestens einen der folgenden Arbeitsschritte umfasst:
Enteisenung (131) zur Entfernung großer metallischer Rückstände (31) und Sieben (132) zur Entfernung des Feingutes (32) der Materialien.

9. Verfahren nach einem der vorangehenden Ansprüche, **dadurch gekennzeichnet, dass** es vor dem Lagerungsschritt (120) mit Befeuchtung ferner einen oder mehreren der folgenden Schritte in beliebiger Reihenfolge umfasst:
einen Schritt (141) des Entfernens von sperrigen Abfällen (41);
einen oder mehrere Schritte (142, 152) des Zerdrückens der in der Mischung enthaltenen Abfallmaterialien (10);
einen Enteisenungsschritt (143) des Entfernens von Eisenabfällen (43); und
einen Schritt (144) des Entfernens von leichten Verunreinigungen (44) wie Papier, Holz, Kunststoff und dergleichen, wobei jeder der Schritte vor oder nach dem Schritt des Mischens (110) ausgeführt wird.

10. Verfahren nach einem der vorangehenden Ansprüche, **dadurch gekennzeichnet, dass** es ferner vor dem Schritt (120) der Lagerung und nach dem Schritt des Mischens (110) einen Schritt (150) des Teilens der Mischung in eine Vielzahl von Gruppen (A), (B), (C), (D), (E), (F) mit einer festglegten Partikelgröße umfasst; wobei der Lagerungsschritt (120) mit Befeuchung bei den unterschiedlichen Gruppen (A), (B), (C), (D), (E), (F) getrennt ausgeführt wird, wodurch gemäß der Partikelgröße geteilte Betonzuschläge (20) erhalten werden.

11. Verfahren nach einem der Ansprüche 1 bis 9, **dadurch gekennzeichnet, dass** es ferner vor dem Schritt (120) des Mischens (110) einen Schritt (150) des Teilens eines jeden Abfallmaterials in eine Vielzahl von Gruppen (A), (B), (C), (D), (E), (F) mit festglegten Partikelgrößen umfasst; wobei es ferner **dadurch gekennzeichnet ist, dass** der Schritt des Mischens (110) und der Schritt der Lagerung (120) für homogene Gruppen (A), (B), (C), (D), (E), (F) der unterschiedlichen Abfallmaterialien (10) getrennt ausgeführt werden.

12. Verfahren nach Anspruch 10 oder 11, **dadurch gekennzeichnet, dass** nach dem Schritt des Teilens (150) eventuelle Materialstücke mit einer Partikelgröße größer als ein erlaubter Maximalwert entweder direkt oder durch Zurücksenden zum Schritt des Mischens (110) einem Schritt des Zerdrückens (142), (152) ausgesetzt werden.

13. Verfahren nach einem der vorangehenden Ansprüche, **dadurch gekennzeichnet, dass** der Befeuchtungsschritt zum Aufrechterhalten eines Feuchtigkeitsgehalts von mindestens 10 Gew.-% und vorzugsweise von mindestens 15 Gew.-% in der Mischung ausgeführt wird.

14. Verfahren nach einem der vorangehenden Ansprüche, **dadurch gekennzeichnet, dass** der Lagerungsschritt (120) mindestens 15 Tage andauert.

15. Verfahren nach einem der vorangehenden Ansprüche, **dadurch gekennzeichnet, dass** es beim geplanten Ende des Lagerungsschrittes (120) auch einen Schritt (160) der Überprüfung der chemischen Zusammensetzung der Mischung relativ zu den Referenzparametern und, wenn die Referenzparameter nicht eingehalten sind, eine Verlängerung des Lagerungsschritts (120) mit Befeuchtung für einen zusätzlichen bzw. festgelegten Zeitraum umfasst, der gemäß dem Ergebnis des Schritts (160) der Überprüfung der Zusammensetzung definiert wird.

16. Verfahren zur Herstellung von Beton zur Herstellung von Straßenfundamenten und dergleichen, **dadurch gekennzeichnet, dass** es Folgendes umfasst:
einen Arbeitsschritt der Herstellung eines Betonzuschlags (20) nach einem der vorangehenden Ansprüche; und einen Arbeitsschritt (170) des Vermischens, während dem der Betonzuschlag (20) mit natürlichen Betonzuschlägen und/oder hydraulischen Bindemitteln gemischt wird.

## Revendications

1. Procédé pour la production d'agrégats pour la réalisation de fondations de routes et similaires, **caractérisé en ce qu'**il comprend les étapes opérationnelles suivantes :
une étape (100) de sélection des déchets suivants :
déchets de carrière (11) comme les déblais, les chutes de marbre ou d'autres déchets dérivant de pierres naturelles soumis à un processus mécanique simple ;
déchets non contaminés dérivant de la construction ou de démolitions (12) comme le ciment, les briques, les déchets mixtes, de la terre provenant de creusements ;
des déchets inertes (13) comme le gravier lavé ;
des scories blanches(14) provenant des aciéries, étant un mélange humide d'oxyde de calcium et de carbonate de calcium ; des scories noires (15) provenant des aciéries, étant une scorie provenant d'un four électrique qui était soumis, dans l'installation de production, à des baisses rapides de la température ;
du matériel réfractaire (16) provenant des aciéries ;
une étape (110) de mélange dudit matériel dans des proportions prédéterminées pour obtenir un mélange de déchets (10) ;
une étape d'humidification du mélange avec de l'eau ; et
une étape (120) de stockage du mélange durant une période prédéterminée, en l'humidifiant de façon répétée avec de l'eau durant la période complète, de sorte que durant la période de stockage des réactions chimiques se produisent convertissant les différents déchets (10) en des produits qui sont chimiquement inertes et non polluants, ledit mélange constituant un agrégat (20), à la fin de l'étape de stockage (120) pour la réalisation de fondations de routes et similaires.

2. Procédé selon la revendication 1, **caractérisé en ce que** durant la période de stockage, les réactions chimiques qui se produisent incluent la conversion de la chaux vive présente dans le mélange en carbonate de calcium et/ou en chaux éteinte et des réactions chimiques d'insolubilisation, en particulier comme hydroxydes et comme carbonates, des métaux lourds présents dans le mélange.

3. Procédé selon la revendication 1 ou 2, **caractérisé en ce que** durant l'étape de stockage (120) un processus de cristallisation se produit, avec la formation de silicates stables incluant les métaux présents dans le mélange.

4. Procédé selon l'une quelconque des revendications précédentes, **caractérisé en ce qu'**il est mis en oeuvre en utilisant exclusivement des déchets (10) et de l'eau, sans rien ajouter d'autre.

5. Procédé selon la revendication 1, **caractérisé en ce que** l'étape (110) de mélange des déchets (10) se produit dans les proportions suivantes, exprimées en pourcentages par rapport au poids global du mélange obtenu :
0%< déchets de carrière (11) ≤1% ;
10%≤ déchets provenant de la construction et des démolitions (12) ≤20% ;
10%< déchets inertes (13) ≤20% ;
25%≤ scories blanches (14) + matériel réfractaire (16) ≤35 ; et
35%< scories noires (15) ≤45% ;

6. Procédé selon l'une quelconque des revendications précédentes, **caractérisé en ce qu'**il comprend également, avant l'étape de mélange (110), une étape préliminaire de traitement (130) pour tous les déchets (10) ou une partie de ces derniers.

7. Procédé selon la revendication 6, **caractérisé en ce que** l'étape préliminaire de traitement (130) est réalisée sur les scories blanches (14), sur les scories noires (15) et sur le matériel réfractaire (16).

8. Procédé selon la revendication 6 ou 7, **caractérisé en ce que** l'étape préliminaire de traitement (130) inclut au moins une des étapes opérationnelles suivantes :
élimination du fer (131) pour éliminer tout résidu de métal (31) ayant de grandes dimensions ; et le tamisage (132) pour éliminer la fraction fine (32) dudit matériel.

9. Procédé selon l'une quelconque des revendications précédentes, **caractérisé en ce qu'**il comprend également, avant l'étape de stockage (120) avec humidification, une ou plusieurs des étapes suivantes dans n'importe quel l'ordre :
une étape (141) d'élimination des déchets volumineux (41) :
une ou plusieurs étapes (142), (152) d'écrasement des déchets (10) contenus dans le mélange ;
une étape d'élimination du fer (143) pour éliminer tout déchet ferreux (43) ; et
une étape (144) d'élimination de toutes les impuretés légères (44), comme le papier, le bois, le plastique et similaires ; chacune des étapes étant réalisée avant ou après l'étape de mélange (110).

10. Procédé selon l'une quelconque des revendications précédentes, **caractérisé en ce qu'**il comprend également avant l'étape de stockage (120) et avant l'étape de mélange (110) une étape (150) de division du mélange en une pluralité de groupes (A), (B), (C), (D), (E), (F) avec des dimensions de particules prédéterminées ; l'étape de stockage (120) avec mouillage étant réalisé séparément pour les différents groupes (A), (B), (C), (D), (E), (F) obtenant ainsi des agrégats (20) déjà divisés selon la dimension des particules.

11. Procédé selon l'une des revendications 1 à 9, **caractérisé en ce qu'**il comprend également, avant l'étape de mélange (110), une étape (150) de division de chaque déchet en une pluralité de groupes (A), (B), (C), (D), (B), (F) avec des dimensions de particules prédéterminées ; étant également **caractérisé en ce que** l'étape de mélange (110) et l'étape de stockage (120) sont réalisées séparément pour des groupes homogènes (A), (B), (C), (D), (E), (F) des différents déchets (10) .

12. Procédé selon la revendication 10 ou 11, **caractérisé en ce qu'**après l'étape de division (150), toutes les pièces de matériel ayant une taille de particule supérieure à une valeur maximale admise sont soumises à une étape d'écrasement (142), (152) directement ou en étant renvoyées à l'étape de mélange (110).

13. Procédé selon l'une quelconque des revendications précédentes, **caractérisé en ce que** l'étape d'humidification est réalisée en maintenant un niveau d'humidité d'au moins 10% du poids, et de préférence au moins 15% du poids dans le mélange.

14. Procédé selon l'une quelconque des revendications précédentes, **caractérisé en ce que** l'étape de stockage (120) dure au moins 15 jours.

15. Procédé de décontamination selon l'une quelconque des revendications précédentes, **caractérisé en ce qu'**il comprend également, à la fin prévue de l'étape de stockage (120), une étape (160) de contrôle de la composition chimique du mélange par rapport aux paramètres de référence et, si les paramètres de référence ne sont pas respectés, un prolongement de l'étape de stockage (120) avec humidification pendant une période supplémentaire ou prédéterminée ou une période définie en fonction du résultat de l'étape (160) de contrôle de la composition.

16. Procédé pour la production de bétons pour la réalisation de fondations de routes et similaires, **caractérisé en ce qu'**il comprend :
une étape opérationnelle de production d'un agrégat (20) selon l'une quelconque des revendications précédentes ; et une étape opérationnelle fusion (170) durant laquelle l'agrégat (20) est mélangé avec des agrégats naturels et/ou des liants hydrauliques.
